(19) Europäisches Patentamt

European Patent Office

Office européen des brevets

(11) EP 1 708 374 A1

(12) **DEMANDE DE BREVET EUROPEEN**

(43) Date de publication:
04.10.2006 Bulletin 2006/40

(51) Int Cl.:
*H04B 1/52* (2006.01)    *H04B 7/155* (2006.01)

(21) Numéro de dépôt: 06290371.1

(22) Date de dépôt: 06.03.2006

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **11.03.2005 FR 0502415**

(71) Demandeur: **Sodielec**
**12100 St Georges De Luzencon (FR)**

(72) Inventeurs:
• **Desclaux, Fabrice**
**12100 Millau (FR)**
• **Chante, Mathieu**
**12100 Millau (FR)**

(74) Mandataire: **Nicolle, Olivier**
**Santarelli**
**14, avenue de la Grande Armée,**
**BP 237**
**75822 Paris Cédex 17 (FR)**

(54) **Répéteur isofréquence pour réseaux de télévision numérique terrestre**

(57)    Le répéteur de signal à fréquence unique comporte un dispositif adaptatif agissant sur des signaux numérisés et ayant un filtre adaptatif numérique pour annuler le couplage entre ladite antenne d'émission et ladite antenne de réception. Le filtre adaptif numérique (200) comprend des moyens de calcul (3) propres à calculer lors d'une phase de démarrage du filtre les coefficients dudit filtre adaptatif numérique (200), les moyens de calcul (3) comportant un algorithme d'analyse de prédiction linéaire (LPC) d'un processus autorégressif (AR) apte à identifier le canal équivalent par lequel transite le signal utile et à fournir directement et sans phase d'apprentissage les valeurs de tous les coefficients du filtre adaptatif numérique (200) en une seule fois.

Fig.6

**EP 1 708 374 A1**

**Description**

La présente invention concerne un répéteur isofréquence pour les réseaux de télévision numérique terrestre (appelé DVB-T pour « *Digital Video Broadcasting-Terrestrial* »).

Elle trouve une application générale en traitement du signal et en particulier en télévision numérique terrestre (TNT). Elle s'applique également en radiodiffusion audio numérique (DAB).

Dans les réseaux de transmission hertzienne, on peut être amené à combler une zone d'ombre (terrain vallonné, tunnel, zone urbaine) en utilisant localement un répéteur qui a pour fonction de capter, filtrer, amplifier, puis retransmettre un signal hertzien. Lorsque le réseau DVB-T est isofréquence, appelé encore SFN pour « *Single Frequency Network »*, la fréquence d'émission du répéteur est identique à la fréquence de réception. Un couplage naturel non nul existe alors entre les antennes d'émission et de réception. Ce couplage produit une déformation spectrale (ondulation) qui peut parfois très fortement dégrader la qualité du signal émis vers la zone d'ombre, il est donc impératif de réduire ce couplage.

Généralement, la réduction du couplage est physiquement limitée et, le spectre émis est entaché d'une ondulation résiduelle. Cette ondulation résiduelle peut atteindre plusieurs décibels, ce qui limite d'autant la puissance que le répéteur peut émettre.

Pour palier ce problème, une solution connue consiste à intégrer au répéteur un traitement sur le signal incident réduisant les effets néfastes du couplage. Assimilable à une annulation d'écho, ce traitement du signal a pour rôle de minimiser l'ondulation spectrale résiduelle et permettre ainsi au répéteur d'émettre à puissance nominale. De manière connue, le traitement du signal consiste à introduire dans le répéteur un correcteur d'écho faisant appel aux techniques du filtrage adaptatif.

Le document EP-B-1 261 148 décrit un répéteur de signal à fréquence unique équipé d'un filtre adaptatif destiné à annuler le couplage ayant lieu entre l'antenne d'émission et l'antenne de réception. Le répéteur comprend un premier convertisseur pour convertir un premier signal radiofréquence en un signal intermédiaire ; un filtre pour filtrer le signal intermédiaire ; un amplificateur pour amplifier le signal intermédiaire ; des moyens de régulation pour commander automatiquement le gain dudit signal intermédiaire ; un second convertisseur pour convertir le signal intermédiaire en un second signal radiofréquence ; un amplificateur de puissance pour amplifier le second signal radiofréquence ; et un filtre de sortie.

Le filtre adaptatif comporte une rétroaction négative d'un signal de rétroaction et agit sur des signaux numérisés.

L'algorithme adaptatif utilisé par le filtre adaptatif est de type par approximation.

Un tel répéteur a l'inconvénient de présenter une mise en route lente, c'est-à-dire de convergence lente.

De plus, les moyens de régulation CAG sont du type analogique dans la mesure où ils interviennent en amont de la conversion fréquence intermédiaire vers bande de base. Une telle CAG analogique en amont de la conversion en bande de base présente un rapport signal à bruit relativement insatisfaisant en raison de la difficulté de réguler les signaux analogiques de faible niveau.

Le document EP-A-1 087 559 décrit un dispositif répéteur pour réseaux de télévision numérique terrestre dans lequel une annulation d'écho est mise en oeuvre.

La technique d'annulation d'écho nécessite ici la connaissance expresse du type de modulation utilisé, c'est-à-dire une connaissance de la structure intime du signal incident. Il en résulte que les moyens permettant de mettre en oeuvre l'annulation d'écho dépendent des caractéristiques du signal incident et requièrent une phase d'apprentissage relativement coûteuse.

La présente invention a pour objet de remédier aux inconvénients mentionnés ci-avant.

Elle porte sur un répéteur de signal à fréquence unique, du type comportant :

- une antenne de réception pour recevoir un premier signal radiofréquence, ayant une puissance de réception ;
- un premier convertisseur pour convertir ledit premier signal radiofréquence en un signal intermédiaire ;
- un filtre pour filtrer le signal intermédiaire ;
- un amplificateur pour amplifier le signal intermédiaire ;
- des moyens de régulation pour commander automatiquement le gain dudit signal intermédiaire ;
- un second convertisseur pour convertir le signal intermédiaire en un second signal radiofréquence ;
- un amplificateur de puissance pour amplifier le second signal radiofréquence ;
- un filtre de sortie ;
- une antenne d'émission, un couplage ayant lieu entre ladite antenne d'émission et ladite antenne de réception ; et
- un dispositif adaptatif agissant sur des signaux numérisés et ayant un filtre adaptatif numérique pour annuler ledit couplage entre ladite antenne d'émission et ladite antenne de réception.

Selon une définition générale de l'invention, le filtre adaptif numérique comprend des moyens de calcul propres à calculer lors d'une phase de démarrage du filtre les coefficients dudit filtre adaptatif numérique, les moyens de calcul comportant un algorithme d'analyse de prédiction linéaire d'un processus autorégressif apte à identifier le canal équivalent par lequel transite le signal utile et à fournir directement et sans phase d'apprentissage les valeurs de tous les coefficients du filtre adaptatif numérique en une seule fois.

Une telle phase de démarrage permet de gagner un temps précieux lors de la mise en route du répéteur ou même au redémarrage de celui-ci. Ainsi, les éventuelles coupures de diffusion des programmes télévisés sont moins longues que celles attendues d'un répéteur de l'état de la technique, notamment du document EP-B-1 261 148. De plus, l'algorithme d'analyse de prédiction linéaire d'un processus autorégressif permet d'identifier le canal équivalent par lequel transite le signal utile lors du rebouclage (rétroaction). Une telle identification permet une annulation ou correction « aveugle », c'est-à-dire sans phase d'apprentissage, contrairement au document EP-A-1 087 559. Il en résulte qu'il n'est pas nécessaire de connaître la structure intime du signal incident pour faire fonctionner correctement l'algorithme du filtre adaptatif numérique selon l'invention.

Selon une réalisation, le filtre adaptatif numérique est appliqué à un signal numérique en bande de base issu d'une numérisation en fréquence intermédiaire, d'une conversion de fréquence et d'une régulation de gain CAG numérique. Une telle CAG numérique intervenant en aval de la conversion fréquence intermédiaire vers bande de base a pour avantage d'optimiser le rapport signal à bruit et apporte une meilleure reproductibilité, une stabilité en température et une quadrature parfaite du signal analytique en bande de base par rapport à une CAG analogique de l'art antérieur.

Selon une autre réalisation, le filtre adaptatif numérique comprend un algorithme de mise à jour des coefficients dudit filtre après la phase de démarrage.

En pratique, le filtre adaptatif numérique utilise une fréquence d'échantillonnage sensiblement égale à la largeur de bande du signal utile. Une telle fréquence d'échantillonnage permet de transformer le signal à corriger (annuler) en un processus auto-régressif.

En pratique, le filtre adaptatif numérique est unique. Un tel filtre permet ainsi d'annuler des échos complexes, le cas échéant dus à des réflexions non métalliques).

Par exemple, le filtre adaptatif numérique comprend plusieurs dizaines de coefficients de filtrage, par exemple environ 80, ce qui permet d'annuler des échos simples, des échos multiples ou des échos diffus.

En pratique, un processeur de type DSP calcule et met à jour les coefficients du filtre adaptatif numérique.

La présente invention a également pour objet un procédé pour retransmettre des signaux à fréquence unique, du type utilisé dans un répéteur de signal à fréquence unique et comportant les étapes suivantes :

    a) recevoir un premier signal radiofréquence par l'intermédiaire d'une antenne de réception ;
    b) convertir ledit premier signal radiofréquence en un signal intermédiaire ;
    c) filtrer et amplifier le signal intermédiaire ;
    d) commander automatiquement le gain dudit signal intermédiaire ;
    e) convertir le signal intermédiaire en un second signal radiofréquence ;
    f) amplifier et filtrer le second signal radiofréquence ;
    g) transmettre ledit second signal radiofréquence par l'intermédiaire d'une antenne d'émission, dans lequel un couplage a lieu entre lesdites antennes d'émission et de réception ;
    h) annuler ledit couplage par l'intermédiaire d'un filtre adaptatif numérique.

Selon une définition générale de l'invention, l'étape d'annulation du couplage comprend une phase de démarrage comportant une étape de calcul des coefficients dudit filtre adaptatif numérique, selon un algorithme d'analyse de prédiction linéaire d'un processus autorégressif apte à identifier le canal équivalent par lequel transite le signal utile et à fournir directement et sans phase d'apprentissage les valeurs de tous les coefficients du filtre adaptatif numérique en une seule fois.

En pratique, le procédé comprend en outre une étape de mise à jour des coefficients dudit filtre après la phase de démarrage afin de suivre les éventuelles variations du couplage entre les antennes d'émission et de réception.

La présente invention a encore pour objet un support d'informations lisible par un système informatique, caractérisé en ce qu'il comporte des instructions d'un programme informatique permettant la mise en oeuvre d'un procédé de traitement du signal visé ci-avant, lorsque ce programme est chargé et exécuté par un système informatique.

La présente invention a également pour objet un support d'informations amovible, partiellement ou totalement, lisible par un système informatique, caractérisé en ce qu'il comporte des instructions d'un programme informatique permettant la mise en oeuvre d'un procédé de traitement du signal visé ci-avant, lorsque ce programme est chargé et exécuté par un système informatique.

La présente invention a enfin pour objet un programme d'ordinateur stocké sur un support d'informations, ledit programme comportant des instructions permettant la mise en oeuvre du procédé de traitement du signal visé ci-avant, lorsque ce programme est chargé et exécuté par un système informatique.

D'autres caractéristiques et avantages de l'invention apparaîtront à la lumière de la description détaillée ci-après et des dessins dans lesquels :

- la **figure 1** représente un schéma fonctionnel d'un répéteur de signal à fréquence unique de l'art antérieur ;
- la **figure 2** représente le modèle d'un répéteur avec rebouclage de l'art antérieur ;
- la **figure 3** représente la chaîne de traitement du signal du répéteur en bande de base selon l'invention ;
- la **figure 4** représente le modèle du répéteur en bande de base selon l'invention ;
- la **figure 5** représente schématiquement une implémentation du filtre correcteur selon l'invention ;
- la **figure 6** représente schématiquement le système répéteur selon l'invention ;
- la **figure 7** représente schématiquement les éléments constitutifs de la voie descendante du répéteur selon l'invention ; et
- la **figure 8** représente schématiquement les éléments constitutifs de la voie montante du répéteur selon l'invention

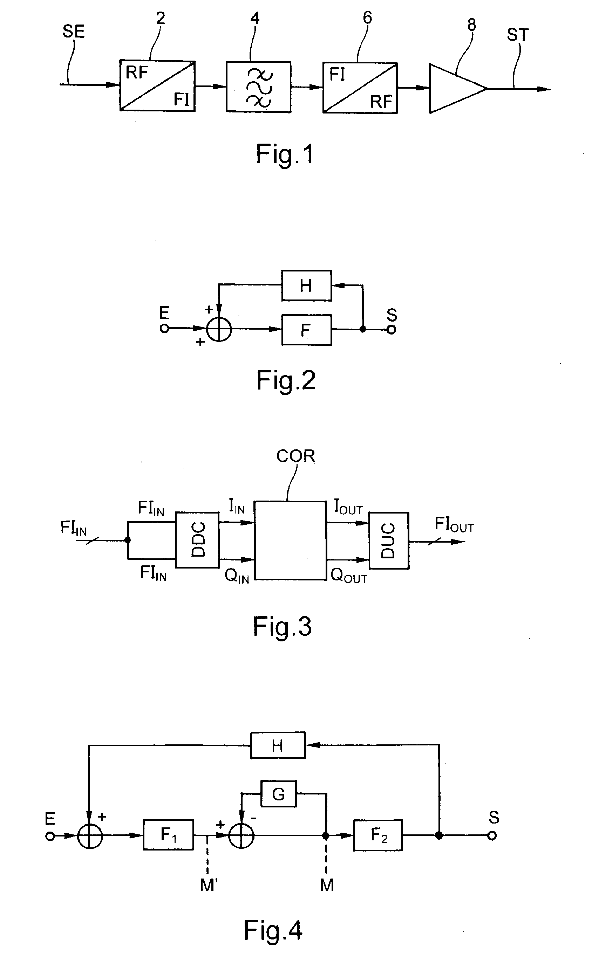

En référence à la **figure 1,** le signal radiofréquence RF entrant SE est reçu par une antenne de réception (non représentée). Un convertisseur 2 convertit le signal RF en un signal de fréquence intermédiaire FI. Un filtre passe bande 4 filtre d'autres signaux non voulus reçus. Ensuite, un convertisseur 6 convertit à nouveau le signal de fréquence intermédiaire FI en un signal radiofréquence RF, sur le même canal que le signal radiofréquence reçu. Enfin, le signal est amplifié au niveau de sortie requis par l'intermédiaire d'un amplificateur de puissance de sortie 8 et est émis en tant que signal de sortie ST.

Un répéteur de signal à fréquence unique peut être modélisé comme représenté sur la **figure 2.** $F$ représente la fonction de transfert équivalente à l'ensemble des fonctions de traitement du signal radiofréquence RF et intermédiaire FI. Cette fonction de transfert $F$ se réduit normalement à un gain constant dans la bande utile. $H$ représente la fonction de transfert équivalente au rebouclage radiofréquence qui existe entre la sortie S et l'entrée E du système. Ce rebouclage est dû à la fois au trajet direct antenne émission - antenne réception et à tous les chemins indirects (trajets multiples). On peut assimiler chacune de ces composantes à des échos. Les constituants des fonctions de transfert $F$ et $H$ sont considérés comme linéaires. La fonction $F$ possède pôles et zéros, mais de par sa nature la fonction de transfert H est dépourvue de pôle.

En référence à la **figure 3,** le filtre adaptif numérique, appelé encore correcteur adaptatif, vient s'insérer en fréquence intermédiaire et a pour but de minimiser l'effet de couplage entre l'antenne de réception et l'antenne d'émission.

Le correcteur adaptatif COR est entièrement réalisé en numérique.

La nature complexe du couplage impose l'implémentation du correcteur COR en complexe également. Pour ce faire, on insère un convertisseur DDC fréquence intermédiaire $FI_{IN}$ vers bande de base $I_{IN}$ et $Q_{IN}$ en amont dudit correcteur COR, ainsi qu'un convertisseur DUC bande de base $I_{OUT}$ et $Q_{OUT}$ vers fréquence intermédiaire $FI_{OUT}$ en aval. En terme de fonction de transfert, tout se passe comme si l'ensemble des traitements était effectué en bande de base sur des signaux complexes.

Le modèle équivalent complet est celui représenté en **figure 4,** sur laquelle tous les signaux sont complexes.

$H$ est la fonction de transfert du rebouclage parasite (écho).

$F_1$ est la fonction de transfert du filtrage global équivalent dans la voie descendante. Cette fonction intègre un convertisseur analogique/numérique en bande de base. On considère que la régulation de gain intégrée dans la voie descendante est parvenue au régime établi.

$F_2$ est la fonction de transfert du filtrage équivalent dans la voie montante. Cette fonction intègre un convertisseur numérique/analogique en bande de base. Il est à noter que le produit $F_1F_2$ représente le gain du correcteur adaptatif.

$G$ est la fonction de transfert du correcteur COR. Celle-ci est implémentée de façon numérique sous la forme d'un filtre numérique FIR, c'est-à-dire un filtre de réponse impulsionnelle finie et s'écrit :

$$(1) \quad G(\omega) = \overline{G}\,\overline{u}^{t}$$

$$(2) \quad \overline{G} = (g_0, g_1, ..., g_{p-1})$$

$$(3) \quad \overline{u} = (e^{-i\omega T_s}, e^{-12\omega T_s}, ..., e^{-ip\omega T_s})$$

où $T_s$ est la période d'échantillonnage du filtre numérique $\overline{G}$
et $p$ le nombre de ses coefficients complexes.

La fonction de transfert du système s'écrit donc :

$$(4) \quad \mathrm{T} = \frac{S}{E} = \frac{F_1 F_2}{1 + G - H \, F_1 \, F_2}$$

On cherche *in fine* à annuler les effets de distorsion induits par le rebouclage H, c'est-à-dire que l'on souhaite avoir une fonction de transfert optimale $T_{OPT} = F_1 F_2$. Le correcteur correspondant $\overline{G}_{OPT}$ doit donc être tel que :

$$(5) \quad \overline{G}_{OPT} = \arg \min_{\overline{G}}(G - H \, F_1 \, F_2)$$

L'obtention de $\overline{G}_{OPT}$ s'effectue en deux étapes principales :

- une première étape d'estimation $\Psi = \dfrac{M}{E}$ du canal équivalent au système boudé ;

- une seconde étape de calcul dans laquelle, pour chaque valeur de $\Psi$, on calcule des approximations successives de $\overline{G}$ pour tendre vers $\overline{G}_{OPT}$.

L'estimation du canal équivalent est nécessaire pour calculer le filtre correcteur COR. Cette estimation s'effectue à l'aide d'une mesure indirecte au point M de la fonction de transfert $\Psi = \dfrac{M}{E}$ échantillonnée à une fois la largeur canal (par exemple 7,61 MHz). On peut donc écrire :

$$(6) \quad \Psi = \frac{F_1}{1 + G - H \, F_1 \, F_2}$$

Or, on sait que :

- le signal d'entrée E est un signal DVB-T supposé parfait, de largeur 7,61 MHz, son spectre est donc plat dans cette bande ;
- $G$ et $H$ sont des filtres tout zéros dans cette bande ;
- $F_1$ et $F_2$ sont des filtres de largeur supérieure à 7,61 MHz ;
- $F_1$ intègre une boucle de CAG : par convention, tout se passe donc comme si l'on a $F_1 = 1$.

De ces remarques, on tire que $\Psi$ est équivalent à un filtre tout pôles dont les caractéristiques peuvent être déterminées à l'aide d'un estimateur auto-régressif AR qui fournit directement $\overline{\psi^{-1}} = (\psi_0, \psi_1, \psi_2 \ldots \psi_{p-1}, \psi_p)$, vecteur des coefficients d'un filtre numérique tel que :

$$(7) \quad \Psi = \frac{1}{\Psi^{-1}\overline{v}'}$$

avec

$$(8) \quad \overline{v} = (1, e^{-i\omega T_s}, e^{-i2\omega T_s}, \ldots, e^{-ip\omega T_s})$$

Le calcul de $\overline{\Psi^{-1}}$ s'effectue *via* la séquence suivante :

- Saisie d'un vecteur $\overline{X}$ de $q$ échantillons complexes au point *M ;*
- Calcul de la fonction d'autocorrélation non biaisée dudit vecteur ;
- Calcul des $p+1$ coefficients de prédiction $\psi_k$ par un algorithme de prédiction linéaire tel que l'algorithme connu sous le nom de « Levinson ».

L'utilisation de cet estimateur permet de connaître *H* par identification. En effet, si l'on note l'opérateur d'espérance E(.), on a :

$$(9) \quad E(\overline{\Psi^{-1}}\overline{v}') = 1 + G - H\ F_1\ F_2$$

Aussi, pour améliorer la qualité de l'estimation, on calcule *n* jeux de $\overline{\Psi^{-1}}$ que l'on moyenne:

$$(10) \quad \psi_k = \frac{1}{n}\sum_{i=0}^{n-1}\psi_k^{(i)},\ 0 \le k \le p$$

Où $\psi_k^{(i)}$ est le *k*<sup>ième</sup> coefficient de $\overline{\Psi^{-1}}$ au rang *i*.

Une fois $\overline{\Psi^{-1}}$ déterminé, on peut calculer les coefficients du filtre correcteur *G* .

L'estimation du correcteur optimum $\overline{G}_{OPT}$ s'effectue par approximations successives en utilisant la méthode du gradient. Les relations 5 et 9 montrent que pour $G = \overline{G}_{OPT}$, on doit obtenir, en moyenne, $\Psi_0 = 1$, $\Psi_1 = \Psi_2 = ...\Psi_{p-1} = \Psi_p = 0$. Ainsi, on construit le vecteur d'erreur complexe $\overline{\varepsilon}^2$ et ses dérivées partielles relatives aux coefficients de $\overline{G}$ :

$$(11) \quad \varepsilon^2 = \left|1 - \overline{\Psi^{-1}}\right|^2$$

$$(12) \quad \frac{\partial \overline{\varepsilon}^2}{\partial \overline{G}} \overset{def}{=} \overline{\nabla} = 2(\overline{\Psi^{-1}} - 1)$$

La relation 12 sert à construire un algorithme du Gradient de type Moindres Carrés Moyens (LMS) qui fournit, *in fine,* $\overline{G}_{OPT}$. Cet algorithme se détaille en une phase d'initialisation et une procédure de mise à jour des éléments de $\overline{G}$ :

$$(13)\ \text{Initialisation} :\ \overline{G}^{(0)} = (g_0^{(0)}, g_1^{(0)}, ..., g_{p-1}^{(0)})$$

$$(14)\ \text{Mise à jour} :\ \overline{G}^{(k+1)} = \overline{G}^{(k)} - \delta\overline{\nabla}^{(k)}$$

Dans cette dernière relation, $\delta$ est le pas d'adaptation, c'est un réel positif inférieur à 1.
Il est à remarquer que l'initialisation est basée sur la première estimation canal, l'adaptation ne faisant ensuite que suivre les variations du système.
La synthèse des calculs à effectuer est la suivante :

- Calcul de $\overline{\Psi^{-1}}$

  • Pour *i* de 1 à *n*

    . Prendre un vecteur $\overline{X}_i$ composé de *q* échantillons complexes en *M*.

    . Calculer $\overline{\Psi^{-1}}_i$ par algorithme de Levinson.

  • Calculer $\overline{\Psi^{-1}} = \dfrac{1}{n}\sum_{i=0}^{n-1}\overline{\Psi^{-1}}_i$

- Calcul de $\overline{G}$

  • Calculer $\overline{\nabla} = 2(\overline{\Psi^{-1}} - 1)$

  • Mettre à jour $\overline{G}$ en le remplaçant par $\overline{G}-\delta\overline{\nabla}$

Ces deux étapes sont répétées indéfiniment afin de « poursuivre » d'éventuelles variations du profil d'écho. Lors de la première itération, on initialise le correcteur avec $\overline{G} = (\psi_1, \psi_2,...\psi_p)$ au lieu de le mettre à jour avec la relation 14.

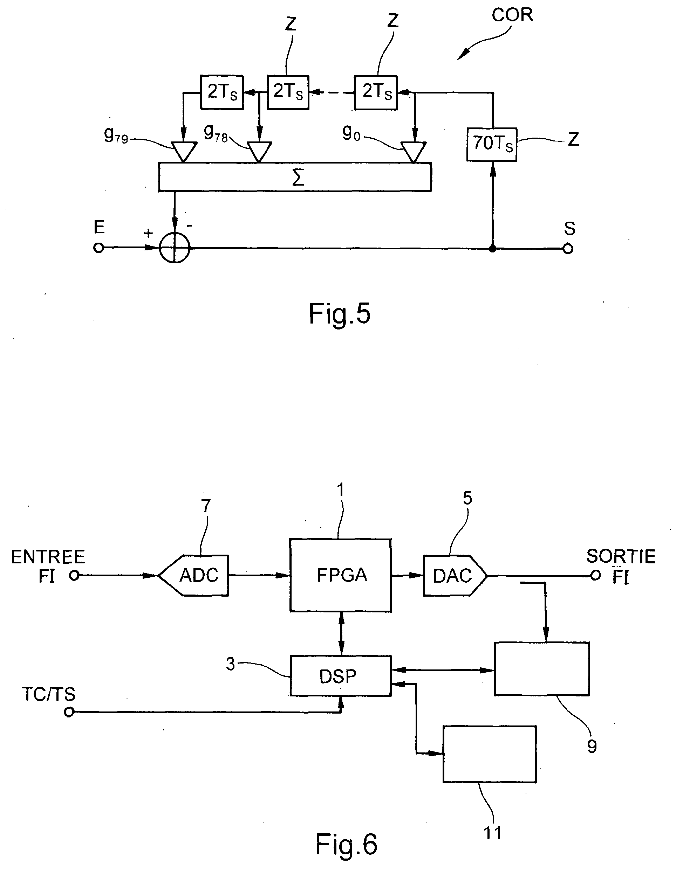

En référence à la **figure 5,** on a représenté une implémentation matérielle du correcteur selon l'invention.

Par exemple, le correcteur COR est calculé pour fonctionner à 7,61 MHz. La fréquence d'échantillonnage au niveau du correcteur est de 15,22 MHz. Un suréchantillonnage de facteur 2 est appliqué au correcteur en insérant des zéros Z entre chacun de ses coefficients g.

Sachant que l'on souhaite minimiser des échos externes allant jusqu'à 10 $\mu$s, il est opportun de choisir environ 80 coefficients. A cette plage temporelle d'écho possible, il faut ajouter le retard propre à la structure de correction en intégrant les éventuels temps de propagation dans les convertisseurs F1 et F2. Ce retard intrinsèque est de l'ordre de 4,5 $\mu$s, ce qui correspond à 35 coefficients nuls CN à ajouter en série dans le correcteur. On choisit donc p=115 sachant que les 35 premiers coefficients sont nuls.

Le correcteur est implémenté sous la forme d'un filtre à 160 coefficients complexes dont la moitié des coefficients sont nuls.

En référence à la **figure 6,** on a représenté l'implémentation du correcteur dans un composant 1 du type Réseau Prédiffusé Programmable par l'Utilisateur, appelé encore FPGA pour « Field Programmable Gate Array ».

Pour estimer correctement le canal équivalent, il est souhaitable que le spectre à l'entrée du correcteur COR soit réellement centré en bande de base. Dans ces conditions, il est utile de connaître la fréquence du signal incident. Cette fréquence est déterminée à l'aide d'un circuit intégré de démodulation 9 du signal DVB-T. Cette fréquence est mesurée en phase d'initialisation (au moins). Un processeur 3 DSP vient programmer le composant FPGA1 afin d'assurer le centrage en fréquence du signal utile vers le correcteur.

Les calculs du correcteur selon l'invention sont effectués dans le processeur 3. Le processeur DSP 3 vient lire les vecteurs $\overline{Xi}$ au point M et calcule les paramètres ($\overline{\Psi^{-1}}$, $\overline{\nabla}$, $\overline{G}$) puis programme le correcteur avec le résultat. Le processeur est équipé d'un bloc mémoire vive et morte II.

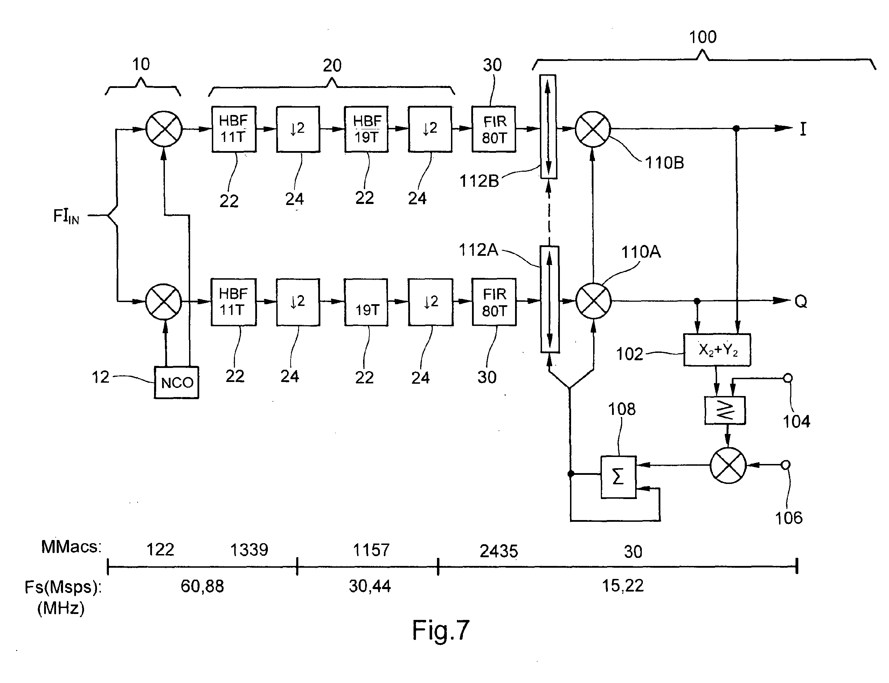

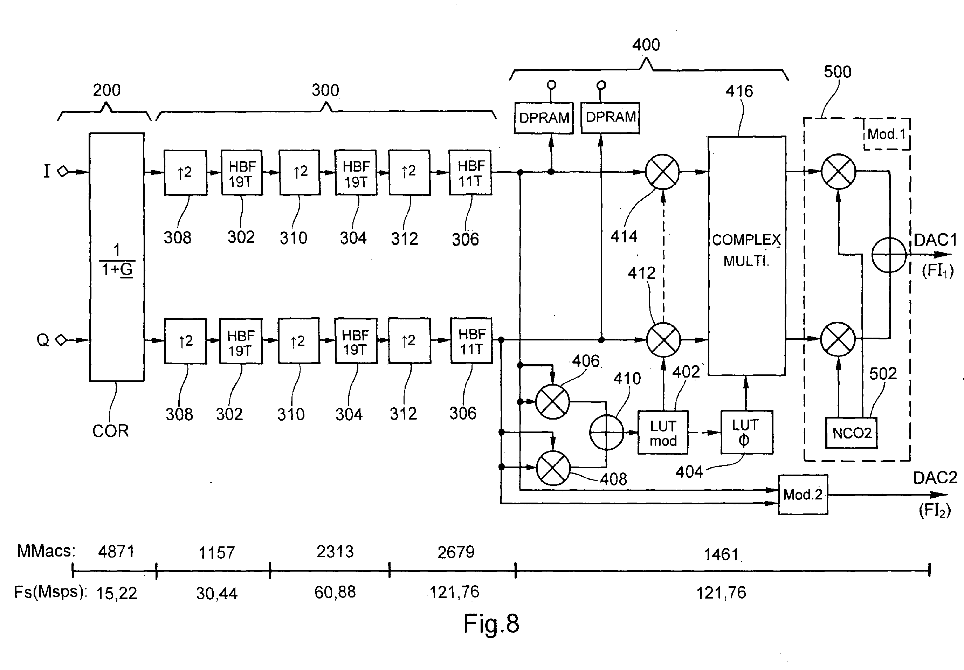

En référence aux **figures 7** et **8,** on a représenté respectivement la voie descendante et la voie montante du répéteur selon l'invention.

La chaîne de traitement comporte essentiellement une conversion fréquence intermédiaire vers bande de base 10, un filtre à facteur de forme réduits 20, une CAG numérique 100, une fonction de correction d'écho 200 et une conversion bande de base vers fréquence intermédiaire 300 et 400.

Les différentes parties sont synchronisées à des fréquences s'échelonnant de 15,22 à 126,76 MHz. La fréquence d'échantillonnage primaire est notée $FS_1$ = 60,88 MHz. Une seule source de fréquence externe est nécessaire.

Une première conversion ou conversion en voie descendante 10 permet de récupérer le signal en fréquence intermédiaire fréquence intermédiaire $FI_{IN}$ en bande de base sous la forme classique du signal analytique, appelé encore paire I/Q en quadrature.

Tous les éléments du convertisseur en bande de base 10 sont synchronisés à la fréquence $FS_1$. Le signal de fréquence intermédiaire analogique du signal d'entrée est par exemple à une fréquence de 45,667 MHz. Grâce au convertisseur 10, le signal de fréquence intermédiaire est numérisé et se retrouve à une fréquence de 15,22 MHz. L'oscillateur numérique 12 (NCO) génère cette même fréquence à 15,22 MHz afin de transposer le signal en bande de base. L'entrée et les sorties du convertisseur 10 sont codées sur 14 bits. Il en est de même pour le couple sinus/cosinus fourni par l'oscillateur numérique NCO. Ce dernier est programmé par le processeur du signal numérique DSP 3.

Les signaux analytiques I et Q issus du convertisseur en bande de base 10 sont ensuite envoyés vers un maillon 20 comprenant des filtres demi-bande 22 et décimateurs 24. Sur chacune des voies I et Q, il est prévu une série de filtrages demi-bandes 22 et décimations par deux 24. Ces filtres demi-bande ou passe-bas 22 et décimateurs 24 permettent de ramener la fréquence d'échantillonnage de $FS_1$ à $FS_2 = \dfrac{FS_1}{4}$. Cette décimation globale d'un facteur 4 est implémentée en deux fois, ce qui permet d'utiliser des filtres demi-bande HBF (Half Band Filter) de longueur N. Ces filtres HBF ont pour particularité de posséder (N - 3)/2 zéros nuls, ce qui simplifie leur implémentation. Ces filtres 22 (HBF) sont des filtres de type FIR symétriques à coefficient réel. Le premier filtre 22 comprend onze coefficients dont quatre nuls. Le second filtre 22 possède dix-neuf coefficients dont huit nuls.

A la fréquence d'échantillonnage $FS_2 = \dfrac{FS_1}{4}$, un couple de filtres 30 à fréquence impulsionnelle FIR réalise de façon numérique l'équivalent d'un filtre à ondes de surface (FOS) et de facteurs de forme faibles. Le signal analytique en sortie de ces filtres 30 contient alors exclusivement l'utile, les canaux adjacents ayant été totalement éliminés.

En pratique, le rôle du filtre 30 est d'éliminer la totalité des signaux qui se situent hors de la bande utile, c'est-à-dire hors l'intervalle [-3,85 ; + 3,85] MHz. Si à l'entrée du filtre, on peut considérer la puissance comme constante et connue - grâce à la régulation CAG analogique située en amont de la numérisation - la sortie quant à elle est d'un niveau directement dépendant de la présence ou non de canaux adjacents. En pratique, on choisit un codage sur 22 bits en sortie du filtre 30. L'entrée, reliée au second décimateur 24, est codée sur 16 bits.

Un système de régulation de niveau numérique 100 (CAG numérique) permet d'optimiser la dynamique numérique pour les étages suivants. Ainsi, le rapport signal à bruit SNR est rendu maximum en tout point situé en aval de cette régulation de niveau CAG numérique.

La régulation de niveau numérique 100 est utile afin d'optimiser le rapport signal à bruit de la chaîne située en aval de la conversion en bande de base. La boucle de CAG numérique 100 effectue une estimation de la puissance du signal en sortie 102 ($I^2 + Q^2 = X^2+Y^2$). On compare ensuite la valeur obtenue à la consigne de régulation AGC référence 104. Le résultat de cette comparaison force le signe de la constante de temps 106 CAG qui est ensuite intégrée 108 de façon continue. Les données incidentes $I_{IN}$ et $Q_{IN}$ sont finalement multipliées 110 par le résultat de cette intégration. Les deux multiplications 110 sont réalisées à l'aide de deux multiplicateurs 110A et 110B et de deux dispositifs de décalage 112A et 112B avec codage en virgule flottante par blocs.

La dynamique de gain est de l'ordre de 48,2 dB. La constante de temps physique possède une dynamique s'étalant de 0,27 ms à 267 ms. Les deux constantes 104 et 106 sont programmables par le processeur extérieur DSP 3.

Le filtre d'égalisation 200 appelé encore dispositif d'annulation d'écho ou correcteur adaptatif constitue ici le coeur de la chaîne de traitement du signal. En sortie de ce filtre d'égalisation 200, il est délivré un spectre égalisé en niveau et en temps de propagation de groupe.

Le filtre d'égalisation 200 est composé d'un filtre récursif de type FIR à structure transversale dont les coefficients sont notés G et d'un retour unitaire. La fonction de transfert globale est donc de la forme $\dfrac{1}{1+G}$.

Toutes les opérations s'effectuent sur des nombres complexes, codés sur deux fois 16 bits. Les coefficients complexes de G sont également codés sur deux fois 16 bits. Chaque coefficient est susceptible d'être mis à jour par le processeur DSP3. Plus de la moitié des coefficients du filtre équivalent sont nuls, avec des retards unitaires de deux $T_s$ au lieu de $T_s$ ($T_s$ période d'échantillonnage $= \dfrac{1}{FS_2}$). Un retard fixe forcé à 70 $T_S$ compense les temps de propagation des voies descendantes et montantes.

En sortie, sur chacune des voies I et Q, il est prévu d'interposer un module 300 comprenant des interpolateurs et filtres passe-bas permettant de ramener la fréquence d'échantillonnage de $FS_2$ à $FS_3 = 8FS_2$. Cette interpolation globale d'un facteur 8 est implémentée en trois fois, ce qui permet d'utiliser des filtres demi-bande HBF, individualisés en 302, 304, et 306.

Les trois filtres utilisés 302, 304, 306 sont dans l'ordre HBF19T, HBF19T et HBF11T. Ces filtres 302, 304, et 306 sont les mêmes que ceux utilisés sur les voies I et Q après la conversion en bande de base.

Le module 300 comprend en outre trois interpolations par deux, individualisés en 308, 310 et 312.

La chaîne de traitement est complétée par un système de précorrection 400 des non linéarités AM/AM et AM/PM de l'amplificateur de puissance situé en aval de la chaîne de traitement.

Cette précorrection consiste à distordre volontairement le signal incident vers l'amplificateur de puissance de façon telle que la combinaison de cette distorsion et des non linéarités intrinsèques à l'amplificateur s'annulent. Pour ce faire, la puissance instantanée du signal est calculée par les multiplieurs 406 et 408 et l'additionneur 410. Le résultat vient adresser les tables de correspondances (LUT, « *Look Up Table »)* 402 et 404 dont les sorties viennent corriger le module et la phase du signal via les multiplieurs 414, 412 et le multiplieur complexe 416 respectivement.

La table LUT 402 qui contient les coefficients de correction AM/AM est de profondeur 256 et de largeur 14 bits. La table LUT 404 qui contient les coefficients de correction AM/PM est de profondeur 1024 et de largeur 14 bits.

Enfin, la chaîne de traitement est complétée par deux convertisseurs 500 en voie montante qui mettent sur deux porteuses le signal analytique IQ. L'une des porteuses est à la même fréquence que la fréquence intermédiaire descendante, l'autre porteuse étant égale à une fréquence de 36 MHz.

La chaîne de traitement se termine ainsi sur une mise sur porteuse des signaux I et Q en bande de base. Deux fréquences intermédiaires FI sont générées. La première fréquence intermédiaire est de même fréquence que la fréquence intermédiaire descendante à $FI_1$ = 45,667 MHz. La seconde fréquence intermédiaire est égale à $FI_2$ = 36 MHz. Cette fréquence intermédiaire $FI_2$ porte l'information IQ avant précorrection. La fréquence intermédiaire $FI_1$ est quant à elle porteuse de l'information IQ après précorrection. Les deux oscillateurs numériques 502 utilisés ont la même structure que celle de l'oscillateur intégré au convertisseur en bande de base.

Le mode commande est codé sur 32 bits avec une programmation via le processeur DSP 3. Les sorties sinus/ cosinus sont codées sur 14 bits.

Selon l'invention, le signal distordu est ainsi traité par un filtre numérique récursif (correcteur) dont les coefficients sont calculés par le processeur de signal numérique DSP. Le filtre numérique récursif est implémenté en bande de base. Ce filtre est encadré par un convertisseur fréquence intermédiaire vers bande de base et un convertisseur bande de base vers fréquence intermédiaire. Le premier de ces convertisseurs intègre une boucle de régulation de niveau. L'ensemble de ces éléments est intégré dans un composant de type FPGA.

Le processeur DSP calcule et met à jour les coefficients du filtre à l'aide d'algorithmes connus pour leur robustesse comme celui de Levinson de type prédiction linéaire et du Gradient du type filtrage adaptatif. Ainsi, l'ondulation du spectre réémis est réduit à environ à 1 db. Ces performances dépendent notamment de la puissance de calcul du processeur DSP et de la vitesse de réaction du système.

## Revendications

1. Répéteur de signal à fréquence unique, du type comportant :

   - une antenne de réception pour recevoir un premier signal radiofréquence, ayant une puissance de réception ;
   - un premier convertisseur pour convertir ledit premier signal radiofréquence en un signal intermédiaire ;
   - un filtre pour filtrer le signal intermédiaire ;
   - un amplificateur pour amplifier le signal intermédiaire ;
   - des moyens de régulation pour commander automatiquement le gain dudit signal intermédiaire ;
   - un second convertisseur pour convertir le signal intermédiaire en un second signal radiofréquence ;
   - un amplificateur de puissance pour amplifier le second signal radiofréquence ;
   - un filtre de sortie ;
   - une antenne d'émission, un couplage ayant lieu entre ladite antenne d'émission et ladite antenne de réception ; et
   - un dispositif adaptatif agissant sur des signaux numérisés et ayant un filtre adaptatif numérique pour annuler ledit couplage entre ladite antenne d'émission et ladite antenne de réception, **caractérisé en ce que** le filtre adaptatif numérique (200) comprend des moyens de calcul (3) propres à calculer lors d'une phase de démarrage du filtre les coefficients dudit filtre adaptatif numérique (200), les moyens de calcul (3) comportant un algorithme d'analyse de prédiction linéaire (LPC) d'un processus autorégressif (AR) apte à identifier le canal équivalent par lequel transite le signal utile et à fournir directement et sans phase d'apprentissage les valeurs de tous les coefficients du filtre adaptatif numérique (200) en une seule fois.

2. Répéteur selon la revendication 1, dans lequel le filtre adaptatif numérique (200) est apte à recevoir un signal numérique en bande de base issu d'une numérisation en fréquence intermédiaire, d'une conversion de fréquence (10) et d'une régulation de gain CAG numérique (100).

3. Répéteur selon la revendication 1 ou la revendication 2, dans lequel le filtre adaptatif numérique (200) comprend un algorithme de mise à jour des coefficients dudit filtre après la phase de démarrage.

4. Répéteur selon l'une quelconque des précédentes revendications, dans lequel le filtre adaptatif numérique (200) utilise une fréquence d'échantillonnage sensiblement égale à la largeur de bande du signal utile.

**5.** Répéteur selon l'une quelconque des précédentes revendications, dans lequel le filtre adaptatif numérique (200) est unique.

**6.** Répéteur selon l'une quelconque des précédentes revendications, dans lequel le filtre adaptatif numérique (200) comprend plusieurs dizaines de coefficients de filtrage.

**7.** Répéteur selon l'une quelconque des précédentes revendications, **caractérisé en ce qu'**il comprend en outre un système de précorrection (400) des non linéarités AM/AM et AM/PM de l'amplification de puissance situé en aval de la chaîne de traitement.

**8.** Répéteur selon l'une quelconque des précédentes revendications, dans lequel un processeur (3) de type DSP est apte à calculer et mettre à jour les coefficients du filtre adaptatif numérique.

**9.** Procédé pour retransmettre des signaux à fréquence unique, du type utilisé dans un répéteur de signal à fréquence unique et comportant les étapes suivantes :

   a) recevoir un premier signal radiofréquence par l'intermédiaire d'une antenne de réception ;
   b) convertir ledit premier signal radiofréquence en un signal intermédiaire ;
   c) filtrer et amplifier le signal intermédiaire ;
   d) commander automatiquement le gain dudit signal intermédiaire ;
   e) convertir le signal intermédiaire en un second signal radiofréquence ;
   f) amplifier et filtrer le second signal radiofréquence ;
   g) transmettre ledit second signal radiofréquence par l'intermédiaire d'une antenne d'émission, dans lequel un couplage a lieu entre lesdites antennes d'émission et de réception ;
   h) annuler ledit couplage par l'intermédiaire d'un filtre adaptatif numérique, **caractérisé en ce que** l'étape d'annulation du couplage comprend une phase de démarrage comportant une étape de calcul des coefficients dudit filtre adaptatif numérique (200), selon un algorithme d'analyse de prédiction linéaire (LPC) d'un processus autorégressif (AR) apte à identifier le canal équivalent par lequel transite le signal utile et à fournir directement et sans phase d'apprentissage les valeurs de tous les coefficients du filtre adaptatif numérique (200) en une seule fois.

**10.** Procédé selon la revendication 9, **caractérisé en ce qu'**il comprend en outre une étape de mise à jour des coefficients dudit filtre après la phase de démarrage.

**11.** Support d'informations lisible par un système informatique, **caractérisé en ce qu'**il comporte des instructions d'un programme informatique permettant la mise en oeuvre d'un procédé de traitement du signal selon l'une quelconque des revendications 9 et 10, lorsque ce programme est chargé et exécuté par un système informatique.

**12.** Support d'informations amovible, partiellement ou totalement, lisible par un système informatique, **caractérisé en ce qu'**il comporte des instructions d'un programme informatique permettant la mise en oeuvre d'un procédé de traitement du signal selon l'une quelconque des revendications 9 et 10, lorsque ce programme est chargé et exécuté par un système informatique.

**13.** Programme d'ordinateur stocké sur un support d'informations, ledit programme comportant des instructions permettant la mise en oeuvre du procédé de traitement du signal selon l'une des revendications 9 et 10, lorsque ce programme est chargé et exécuté par un système informatique.

Fig.1

Fig.2

Fig.3

Fig.4

## Fig.5

Fig.5

## Fig.6

Fig.6

Fig.7

EP 1 708 374 A1

Fig.8

**Office européen**

**des brevets**

# RAPPORT DE RECHERCHE EUROPEENNE

Numéro de la demande

EP 06 29 0371

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,X | EP 1 087 559 A (NIPPON HOSO KYOKAI) 28 mars 2001 (2001-03-28) * colonne 27 - colonne 53 * * figures 3,6-11 * ----- | 1-11 | INV. H04B1/52 H04B7/155 |
| D,A | EP 1 261 148 A (MIER COMUNICACIONES S.A) 27 novembre 2002 (2002-11-27) * colonne 29 * * colonne 38 - colonne 51 * * figures 3-7 * ----- | 1-11 | |
| A | HEWITT A ET AL: "AN AUTOREGRESSIVE APPROACH TO THE IDENTIFICATION OF MULTIPATH RAY PARAMETERS FROM FIELD MEASUREMENTS" IEEE TRANSACTIONS ON COMMUNICATIONS, IEEE SERVICE CENTER, PISCATAWAY, NJ, US, vol. 37, no. 11, 1 novembre 1989 (1989-11-01), pages 1136-1143, XP000074536 ISSN: 0090-6778 * abrégé * * page 1136, colonne de droite, ligne 5 - page 1136, colonne de droite, ligne 45 * ----- | 1-11 | |

| | |
|---|---|
| | **DOMAINES TECHNIQUES RECHERCHES (IPC)** |
| | H04B H04N |

Le présent rapport a été établi pour toutes les revendications

| Lieu de la recherche | Date d'achèvement de la recherche | Examinateur |
|---|---|---|
| La Haye | 16 août 2006 | Van der Zaal, R |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................................
& : membre de la même famille, document correspondant

EPO FORM 1503 03.82 (P04C02)

**EP 1 708 374 A1**

## ANNEXE AU RAPPORT DE RECHERCHE EUROPEENNE
## RELATIF A LA DEMANDE DE BREVET EUROPEEN NO.

EP 06 29 0371

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2006

| Document brevet cité au rapport de recherche | | Date de publication | Membre(s) de la famille de brevet(s) | | Date de publication |
|---|---|---|---|---|---|
| EP 1087559 | A | 28-03-2001 | CN | 1308798 A | 15-08-2001 |
| | | | CN | 1527514 A | 08-09-2004 |
| | | | WO | 9965173 A1 | 16-12-1999 |
| | | | JP | 11355160 A | 24-12-1999 |
| | | | TW | 439354 B | 07-06-2001 |
| EP 1261148 | A | 27-11-2002 | AT | 263459 T | 15-04-2004 |
| | | | AU | 3176601 A | 27-08-2001 |
| | | | BR | 0108495 A | 17-12-2002 |
| | | | CN | 1404666 A | 19-03-2003 |
| | | | DE | 60102570 D1 | 06-05-2004 |
| | | | DE | 60102570 T2 | 05-01-2005 |
| | | | WO | 0161885 A1 | 23-08-2001 |
| | | | ES | 2218379 T3 | 16-11-2004 |
| | | | ES | 2160087 A2 | 16-10-2001 |
| | | | JP | 2003523690 T | 05-08-2003 |
| | | | US | 2003022626 A1 | 30-01-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1261148 B

- EP 1087559 A